# EUROPEAN PATENT SPECIFICATION

(11) **EP 3 169 200 B1**
(45) Date of publication and mention of the grant of the patent: **06.03.2019**
(21) Application number: 15757335.3
(22) Date of filing: 14.07.2015
(51) Int. Cl.: A47J 27/18

(54) **DEVICE FOR FAST COOKING FOODS**
VORRICHTUNG ZUM SCHNELLEN KOCHEN VON NAHRUNGSMITTELN
DISPOSITIF POUR LA CUISSON RAPIDE D'ALIMENTS

(30) Priority: 14.07.2014 IT MI20141276
(43) Date of publication of application: 24.05.2017
(73) Proprietor: Gamboni, Marco Pasquale, 20063 Cernusco sul Naviglio MI (IT)
(72) Inventor: VETRANO, Benito, 20020 Arese MI (IT)
(74) Representative: Marietti, Andrea
(86) International application number: PCT/IB2015/055306
(87) International publication number: WO 2016/009340

(56) References cited:
- US-A- 5 010 806
- US-A- 5 890 420
- US-A1- 2011 104 349
- US-B1- 6 176 174

## Description

### FIELD OF THE INVENTION

The present invention concerns the field of fast cooking foods, and in particular, but without limitation, pasta, rice or other dry food.

### BACKGROUND ART

Different devices for fast cooking pasta are known in the art, said devices generally take advantage from retaining the same pasta in one or more cooking chambers with water at high temperature and pressure, for a limited time interval.

For example, US patent 5,630,359, in name of Stein, describes such a device for cooking pasta comprising a tubular boiler, in which pressurized water is heated, and a cooking chamber tubular too and fitted into the boiler, communicating with the outside by means of input/output openings for the pasta and being filled in a controlled way with hot pressurized water coming from the boiler itself. The input/output openings of the cooking chamber are selectively shuttered and cleared by suitable shut-off valves, which are provided with a sliding shutter and a lever mechanism shaped in such a way to forcing the shutter to perfectly adhere to the aforesaid input/output openings, so as to ensure the related sealingly closing of the cooking chamber when such openings are shuttered. The machine described in US 5,630,359 further provides a suitable motor, presumably electric, which drives the aforesaid shut-off valves and the lever mechanism. A device for fast cooking disclosing the features of the preamble of claim 1 is known from US5890420. However, known machines had poor success and use up to now due to relative mechanical complexity, bulks, and implementation and operation costs.

One of the problems of the known art is also the high energy requirement of the machine in order to manage the pressurized, and then heated, water.

In addition, in the known art machines some waste of raw material can occur, since the cooked pasta often adheres, although in small amounts, to the walls of the various chambers in which it is arranged, and in particular to the walls of the respective cooking chamber.

In addition, the known art machines are usually suitable only for cooking pasta and, in general, only one or few particular pasta typologies, with apparent small versatility of use.

Object of the present invention is to implement a machine for fast cooking foods, which allows cooking at least one food, preferably but not necessarily pasta, rapidly, simply and effectively.

A particular object of the present invention is the production of a machine for fast cooking foods that is mechanically easy, compact and effective.

Further object of the present invention is the realization of a machine for fast cooking foods that eliminates the waste of foods.

Further object of the present invention is the implementation of a machine that allows cooking different typologies of foods.

### SUMMARY OF THE INVENTION

These and other objects are achieved by the present invention by means of a device according to claim 1. Preferred aspects are stated in the dependent claims.

In particular, according to the invention, a device for fast cooking at least one food comprises a boiler for heating a liquid, pressurizing means to pressurize the liquid and at least one cooking chamber fluidically connected to the boiler. The at least one cooking chamber is provided with at least one inlet and at least one outlet for the food and at least one of the inlets and the outlets of the cooking chamber is provided with a shut-off valve to selectively open and sealingly close such an inlet and/or outlet. In particular, according to the invention, the shut-off valve(s) is driven for opening and/or closing by the action of the liquid pressurized by the pressurizing means.

Thanks to the present invention, the cooking chamber can be opened and, above all, closed and held in a closed position, by taking advantage from the action of the pressurized liquid already present in the machine, without the need of further external energy sources.

This allows a significant energy and, above all, space saving in the machine, which is further less complex and thus less expensive.

According to an aspect of the invention, at least one shut-off valve has at least one piston translatable between a first position and a second position, wherein in such a first position the piston obstructs, directly or indirectly, the inlet or outlet of the cooking chamber. On the contrary, in the second position the piston opens, directly or indirectly, such an inlet or outlet to allow a food passing through it.

According to another aspect of the invention, the shut-off valve comprises at least one cylinder in which the piston slides. The cylinder comprises at least one first passage opening for the passage of the food to/from the outside of the (at least one) cooking chamber and at least one second passage opening for the passage of the food to/from the cooking chamber. The second opening is obtained on part of the side surface of the cylinder and coincides with, or is connected to, the inlet or outlet of the cooking chamber.

Preferably, the piston is directly driven by the pressurized liquid.

According to another aspect of the invention, at least one inlet and at least one outlet of the at least one cooking chamber comprise a shut-off valve as described afore. According to a further aspect, the cooking chamber is contained at least partially within the boiler.

Such a solution allows pressurized hot liquid to be transferred from the boiler to the cooking chamber with high thermal efficiency.

According to another aspect of the invention, at least one portion of the inner surface of the cooking chamber has one or more jutting-inwards elements in order to facilitate the detachment of the food from such an inner surface, at least at the end of the respective cooking cycle.

Thanks to this the food waste can be avoided and different typologies of food can be prevented from mixing in subsequent cooking cycles.

According to an embodiment, such one or more jutting-inwards elements comprise a mesh net that coats at least part of the inner surface of the (at least one) cooking chamber.

Preferably, at least one electrovalve adjusts the inflow of liquid from said boiler into the at least one cooking chamber.

According to an aspect of the invention, the pressurizing means comprise at least one positive-displacement pump.

Such a solution allows limiting the size of the machine size and ensures reliability and versatility of use thereof.

According to another aspect of the invention, the device comprises a plurality of cooking chambers usable in parallel and independently one from another and, preferably, immersed in the boiler.

Thanks to this, several food portions can be cooked simultaneously. Furthermore, the cooking of different food typologies can be provided in parallel.

For example, one of the cooking chambers can be used to prepare some pasta, while a different cooking chamber can be used to prepare rice and/or vegetables and/or infusion beverages. The cooking chambers can have different size from one another, for example depending on the different typologies of food treated.

According to an aspect of the invention, at least one cooking chamber is filled with cooking liquid which is heated and pressurized, preferably independently from the possible other cooking chambers.

According to another aspect of the invention, the device comprises a rest and draining chamber placed downstream of the at least one outlet of the cooking chamber(s), to collect the food coming out from the cooking chamber, so that to separate it from the respective cooking liquid.

Preferably, the rest and draining chamber comprises a basket pierced at least at the bottom in order to allow the outflow of the cooking liquid and a collecting container for the dripped liquid.

According to a further aspect, the rest and draining chamber further comprises means for moving the basket at least between a collecting position to collect the food come out from the cooking chamber, and an extraction position of the at least one drained food.

### BRIEF DESCRIPTION OF THE FIGURES

Referring to the accompanying figures, an exemplary and not limitative embodiment of the present invention is now presented, in which:
- figure 1 is a schematic view of a cooking device according to a first embodiment of the present invention;
- figure 2 is a schematic view of a cooking device according to a second embodiment of the present invention;
- figures 3 to 6 are schematic views of the cooking device of figure 2, taken in subsequent steps of a food preparation;

- figures 7a and 7b are schematic views of a shut-off valve used in the cooking device schematized in figure 2 in the two respective operating positions; and
- figure 8 is a schematic view of an alternative embodiment of a cooking device according to the present invention.

### DETAILED DESCRIPTION OF SOME PREFERRED EMBODIMENTS OF THE PRESENT INVENTION

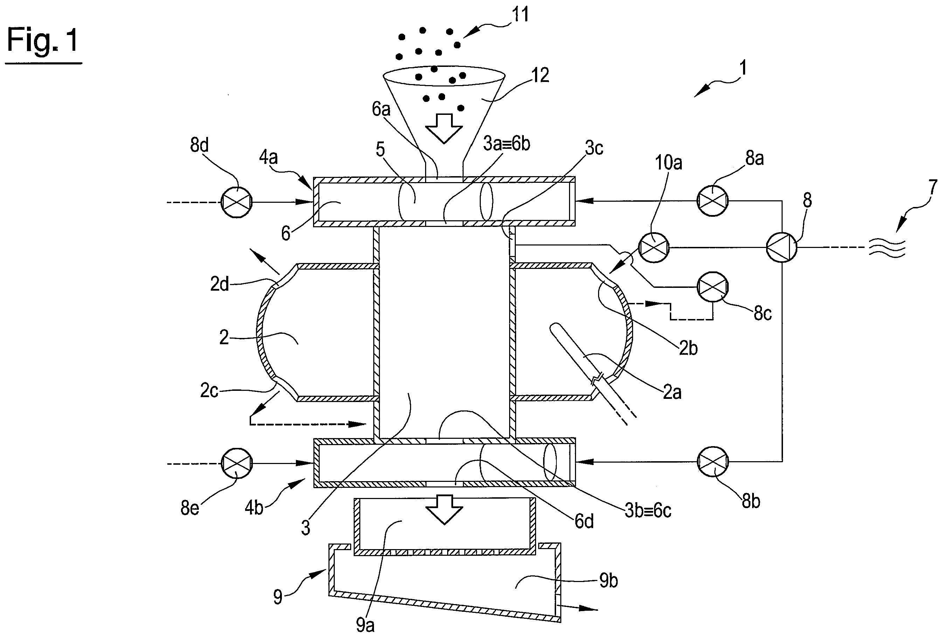

According to the embodiment of the cooking device shown in figure 1, such a device 1 for fast cooking at least one food 11 comprises a boiler 2, in the form of a sealed box-shaped container, and a cooking chamber 3 substantially box-shaped too and provided with input and output openings 3a, 3b for the afore said food 11, which are intended to be sealingly closed by respective shut-off valves 4a and 4b.

Note that the food 11, according to the present invention, is any food adapted to be cooked by immersion in a heated liquid, e.g. pasta or rice or potatoes, or even other food still of dry type. As better explained in the following, however the use of the device 1 for preparing infusion beverages is not excluded.

In particular, the boiler 2 of the embodiment herein illustrated in figure 1 is substantially cylindrically shaped and is shaped to contain and heat pressurized liquid 7, for example and preferably water. Heating means 2a of the liquid 7 are operatively connected to, and preferably contained into, the boiler 2.

In the embodiment herein shown, such heating means 2a comprise electrical resistances preferably driven and adjusted by an automatic controller (not shown). Preferably, the heating means 2a comprise two electrical resistances, only one of which is visible in figure 1.

The boiler 2 is further provided with an input opening 2b, through which the water inflow happens for filling the same, an output opening 2c through which the water contained in the boiler 2 can be drained in a controlled way and/or a part thereof can be drawn off to be conveyed into the cooking chamber 3, and a drawing opening 2d to deal with water expansion inside the boiler itself, if needed, or still to draw a portion thereof to feed to the cooking chamber 3. Note that the shape of such openings forms part of the known field art and thus will not be further described herein.

According to an aspect of the invention, the cooking chamber 3 is preferably connected to an expansion valve, or a pressure relief valve. In particular, such a valve can be adjusted such to open upon reaching a certain threshold value of the pressure inside the boiler 2, thereby avoiding a further pressure increase and ensuring the safety of the machine.

As it will be instead described also in the following, therefore the cooking device 1 comprises pressurizing means to pressurize the liquid 7, mainly water, intended to be fed into the boiler 2 and, as it will be seen, drawn off there in order to fill the cooking chamber 3 once filled with the food 11. Such pressurizing means, according to an innovative aspect of the present invention, advantageously comprise at least one positive displacement pump 8 driven, for example, by a respective controller herein not shown, and connected upstream to a source of liquid (water) 7, for example consisting in the water supply system, and downstream to the input opening 2b of the boiler 2, possibly via at least one electrovalve 10a.

Although not illustrated in figure 1, the cooking device 1 can further comprise level sensors indicating the complete or expected filling of the boiler 2 possibly to the respective automatic controller, so that to effectively adjust the driving of the positive displacement pump 8 and/or the electrovalve 10a during the filling operation of the boiler 2. Alternatively, and preferably, such level sensors are not present and the correct conditions of pressure of the liquid 7 and of filling of the boiler 2 are obtained thanks to the simple operation of the positive displacement pump 8, or other like compressing means to compress the liquid 7, and to the presence of a unidirectional inlet valve interposed between the pump 8 and the boiler 2, as well as an expansion valve, as previously described, placed downstream of the same boiler 2 and preferably fluidically connected to the inlet of the pump 8, in order to ensure the device safety.

The cooking chamber 3 herein illustrated has an elongated shape, and in particular in the embodiment of figure 1 it has a tubular cylindrical shape and is at least partially inserted into the boiler 2, so as to be surrounded for at least one part of its outer side surface by pressurized hot water that, in use, is present in the boiler 2 itself. Note that the symmetry axis of the cylindrical cooking chamber 3 is preferably vertical.

In a preferred embodiment of the invention the cooking chamber 3 is wholly contained inside the boiler 2, except from possible mechanical clutching devices for the coupling to the casing bases of the device 1. Such an embodiment, as it will be evident for the person skilled in the art, allows maximizing the thermal efficiency of the device 1, by reducing possible and unneeded heat losses of the cooking chamber 3 towards the external environment.

Preferably the cooking chamber 3, as well as the boiler 2, is totally or partially made of stainless steel.

Furthermore, as it will be better seen referring to the embodiment 101 of the present invention schematized in figures from 2 to 6, preferentially the inner walls of the cooking chamber 3 can have jutting elements 3c that promote the detachment of the food 11 from the same inner walls of the cooking chamber 3.

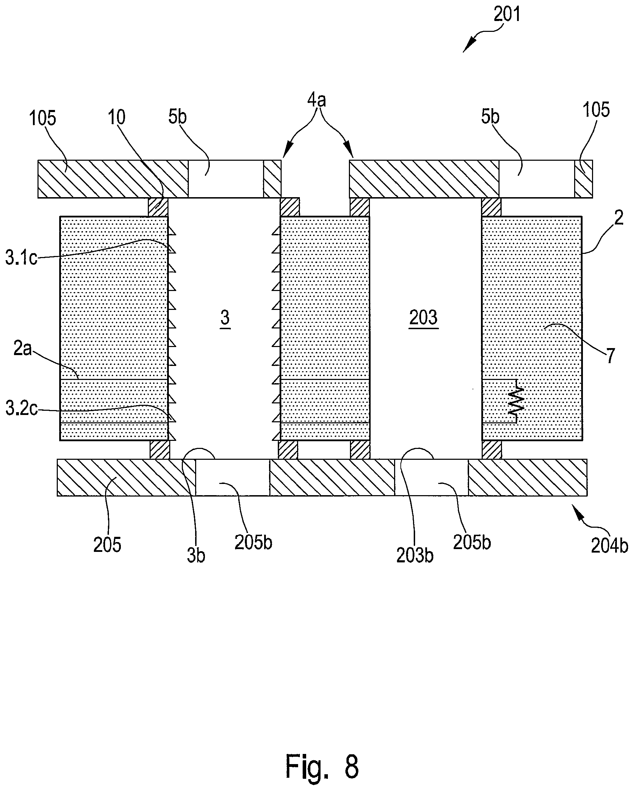

In an exemplification embodiment shown in figure 8, such jutting elements comprise a metal mesh 3.1c coating at least partially, and preferably entirely, the inner surface of the cooking chamber 3c. Preferably, the metal mesh 3.1c has reduced stiffness. According to another preferred aspect, the metal mesh 3.1c is fastened to the inner walls of the cooking chamber 3 and spaced apart from the same (preferably at a distance of about 0.5-1 mm). In particular, the metal mesh can be fastened to the walls through a limited number, for example two or three, of assembling elements 3.2c. Such assembling elements 3.2 can be obtained, for example, by means of bosses or steps made on the inner walls of the cooking chamber 3.

For visualization convenience, the metal mesh 3.1c is depicted in the figures in the embodiment of figure 8 that, as better specified in the following, comprises two cooking chambers. However, it is evident that a metal mesh 3.1c according to the present invention can also be applied to different embodiments of the invention, for example the embodiments of figures 1 - 6.

As stated, the cooking chamber 3 has an inlet 3a and an outlet 3b for the food 11, which are respectively placed at the upper base and the lower base, both preferably circular, of the same cooking chamber 3, in addition to at least one input opening for the inflow of heated and pressurized water, or other liquid 7, coming from the boiler 2.

In this regard, the cooking device 1 provides at least one channel fluidically connecting the boiler 2 to the cooking chamber 3, and at least one respective electrovalve 8c, for example of solenoid type, that can be preferably adjusted by an automatic controller, not shown, and is responsible for the selective opening and closing of such a channel. The possible presence of sensors - not shown in figure - indicating the filling of the cooking chamber 3 and that can be functionally connected to the controller of the electrovalve 8c, can make such an operation further reliable and effective.

Note that, in an embodiment of the present invention herein not shown, the channels connecting the boiler 2 to the cooking chamber 3 can be at least two, one placed in an upper position and the other one placed in a lower position, respectively driven for opening or closing by respective electrovalves o by a multi-way electrovalve. Indeed, any number of such channels and respective electrovalves, depending on the design needs, can be implemented by the person skilled in the art, according to known art. The water fed into the cooking chamber 3, coming from the boiler 2, can be preferably overheated to a pressure of 9-10 atms and to a temperature of about 160°C.

However it is evident that the device of the invention can have, in use, different operating values, for example as a function of the amount and typology of treated food.

The inlet 3a and the outlet 3b of the cooking chamber 3 are respectively adjusted, for the opening and closing, by respective shut-off valves 4a, 4b able to selectively obstruct and clear such inlet and outlet 3a, 3b, depending on the cooking cycle step of the food 11 the device has reached.

In the characteristic embodiment of the present invention shown in figure 1, the two shut-off valves 4a, 4b are substantially identical one to another, therefore for simplicity only the valve 4a is now described. Note that in alternative embodiments of the invention such shut-off valves of the inlet and the outlet 3a, 3b of the cooking chamber 3 can be different from one another and at least one of such valves can be replaced by removable obstruction means of a type known in the art, such as for example a gate.

The shut-off valve 4a herein shown, as well as the valve 4b, has a piston 5 acting as a shutter and is movable inside a respective seat acting as a guide and being preferably composed of a cylinder 6. Such a cylinder 6, in both the valves 4a, 4b, is provided with two openings realized in diametrically opposed position on its side surface and substantially coaxial one to another, which are intended for allowing the passage of the food 11 through the same shut-off valve 4a.

In particular, the input and output openings 6a, 6b of the shut-off valve 4a placed on top at the opening 3a of the cooking chamber 3, interconnect the ending funnel 12 of a dispenser for the food 11 (herein not shown) and the inside of the cooking chamber 3 itself. Note, in this case, that the output opening 6b of the shut-off valve 4a substantially coincides with the inlet 3a of the cooking chamber 3.

Conversely, the input and output openings 6c and 6d respectively of the shut-off valve 4b placed at the bottom at the outlet 3b of the cooking chamber 3, allow the connection between the inside of the cooking chamber 3 and a suitable rest and draining chamber 9 for the food 11, which is usually located in the outer environment, and thus at atmospheric pressure. Also in this case, as it can be realized from figure 1, the input opening 6c of the shut-off valve 4b substantially coincides with the outlet 3b of the cooking chamber 3.

Note that, although herein a cylinder 6 is described as provided with two through openings placed in diametrically opposed position and coaxial, in order to allow the passage of the food 11 through the respective shut-off valve 4a, 4b, any other shape of the openings 6a, 6b and 6c, 6d, of each cylinder 6, at the limit also implemented as a single opening diametrically extending on the side surface of the respective cylinder 6, is alternatively possible.

It will be further noted that in the herein illustrated implementation, the piston 5 of each valve 4a, 4b is movable in a transverse direction with respect to the cooking chamber 3, i.e. to the insertion direction of the food 11 into the chamber 3 itself, and thus substantially to the orthogonal axis of the surfaces of the holes 6a, 6b, 6c, 6d.

According to a preferred aspect of the present invention, in each valve 4a, 4b the piston 5 is sliding in the respective fluid-tight cylinder 6, i.e. it prevents the fluidic passage through the interface existing between its own outer surface and the inner surface of the same cylinder 6. Such a shape, as it will be read in the following, allows obtaining simply and effectively an optimal fluid-tight sealing of the inlet 3a and the outlet 3b of the cooking chamber 3, when the piston 5 obstructs the respective inlet 3a and/or the respective outlet 3b.

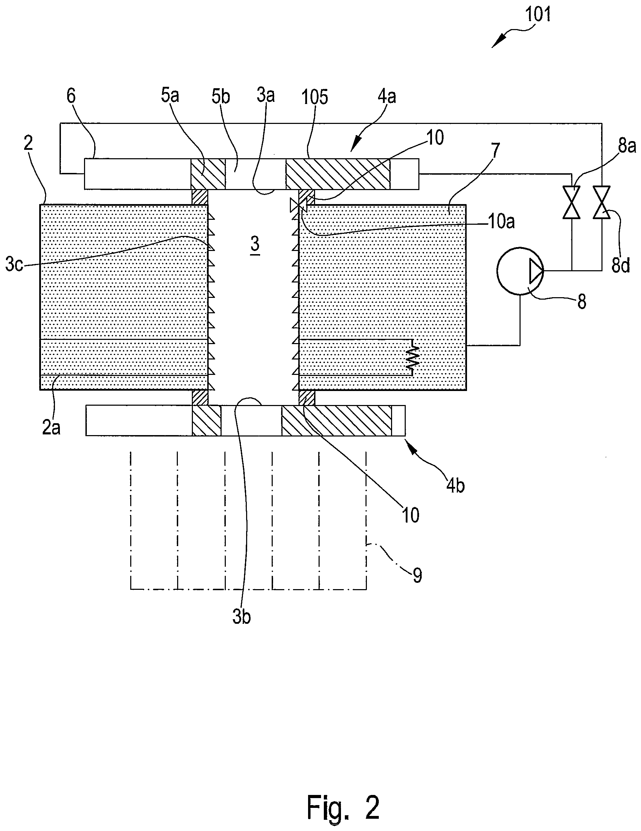

As it will be better seen referring to figures 2-6, the piston 5 of the valves 4a, 4b can advantageously be provided with a transversal hole 5b that, once arranged at the coaxial holes 6a, 6b or 6c, 6d, allows the passage of the food 11 through the corresponding valve 4a, 4b.

The piston 5 is therefore movable at least between two positions: a first position in which such a piston 5 obstructs, directly or indirectly, the inlet 3a or the outlet 3b of the cooking chamber 3 (as visible in figure 1 referring to the upper shut-off valve 4a), and a second position in which the piston 5 clears, directly or indirectly, the inlet 3a or the outlet 3b of the cooking chamber 3 (see for example the position of the piston in the lower shut-off valve 4b represented in figure 1).

The shape of the shut-off valves 4a, 4b, and in particular the shutter being composed of a preferably sealed piston 5 sliding in a respective cylinder 6, allows implementing an effective fluid-tight sealing the shutter, or piston, 5 actuates at the inlet or outlet 3a, 3b of the cooking chamber 3. Indeed, the mechanical constraint exerted by the cylinder 6 on the piston 5, i.e. the fact that the latter is substantially constrained with only one degree of freedom in such a cylinder 6, any movement thereof not transversal to the inlet 3a or outlet 3b of the cooking chamber 3 being prevented, substantially avoids that piston 5 itself can move away from the same inlet or outlet 3a, 3b along an axis transversal to the direction along which the piston 5 slides.

Therefore, substantially, even for high pressures inside the cooking chamber 3, the respective fluid tight is easily and effectively ensured by the shut-off valves 4a, 4b that, thanks to the only-sliding and preferably-sealed constraint implemented between a piston shutter 5 and the respective cylinder 6, make unnecessary the use of complicated lever systems in order to ensure the sealing of the shutter 5 itself.

It should be herein emphasized that the use of at least one shut-off valve 4a, 4b for selectively opening and closing at least the inlet 3a or the outlet 3b of the cooking chamber 3, in which such a shut-off valve 4a or 4b comprises a piston 5 translatable between a first position, in which such a piston 5 directly or indirectly obstructs the inlet 3a or the outlet 3b of the cooking chamber 3, and a second position, in which the piston 5 opens, directly or indirectly, such an inlet 3a or outlet 3b in order to allow the passage of the food 11 directed to, or coming from, the cooking chamber 3, and further preferably comprising also a cylinder 6 in which such a piston 5 sealingly slides and which is suitably provided with passage holes for the food 11, is a new and innovative use in a device for cooking foods.

According to another innovative aspect of the present invention, the piston 5 is advantageously operated by the liquid 7, conveniently pressurized.

As mentioned the liquid 7, normally composed of water directly drawn from the water supply system, is pressurized, for example and preferably by a positive displacement pump 8, and is then selectively sent, in addition to the boiler 2, also to the seat 6, for example cylindrical in figure 1, of the piston 5 of at least one of the shut-off valves 4a, 4b, through respective electrovalves 8a, 8b, 8d, 8e. Such electrovalves 8a, 8b, 8d, 8e adjust, in each valve 4a, 4b, the inflow of pressurized liquid 7 in the two half-chambers defined by the piston 5 and in this way, thanks to their control and to the control of similar means for allowing the controlled outflow of the liquid 7 from such shut-off valves 4a, 4b, the piston 5 can be reciprocated in the seat 6, and thus the shut-off valve 4a or 4b can be opened or closed depending on the movement way of the piston 5 itself. Note that, in case there are at least two shut-off valves 4a, 4b, the shape of such valves 4a, 4b naturally allows their separated and possibly alternated operation, as it will be evident to the person skilled in the art. Further note that, although at least one shut-off valve 4a, 4b has been described herein as provided with a piston 5 operated by a pressurized liquid, any other type of shut-off valve provided with a preferably, but not necessarily, slidable shutter operated by the pressurized liquid 7, still falls within the protection scope herein claimed and makes the cooking device 1 less complex and more efficient from both the energy point of view and the point of view of process times.

In an embodiment of the present invention herein not illustrated, also note that the liquid 7 for operating the piston 5 can be directly drawn off the boiler 2, via at least one suitable connecting channel, and fed in a controlled way, for example through a respective electrovalve, into the respective shut-off valve 4a and/or 4b and preferably into the cylinder 6, so that to operate the same piston 5 without the need of operating the pump 8. In the same way the liquid 7, that at the end of the actuation of the piston 5 has to be ejected from the respective shut-off valve 4a and/or 4b, can be re-directed through a suitable hydraulic circuit into the same boiler 2.

As visible in figure 1, such a cooking device 1 further comprises a rest and draining chamber 9 placed downstream of the cooking chamber 3, or better placed downstream of, and connected with, the outlet 3b of such a cooking chamber 3 through the respective shut-off valve 4b, and that is intended for collecting the food 11 coming out of the cooking chamber 3 and for separating such food a 11 from the respective cooking liquid 7.

More in detail, according to a preferred aspect of the present invention, the rest and draining chamber 9 comprises a basket 9a pierced at least at the bottom and preferably mesh-like shaped, for collecting the food 11 and an underlying container 9b intended for the collection and disposal of the cooking liquid (water) 7. Preferably, the basket 9a can be displaced between a collecting position of the food 11 coming from the cooking chamber 3 and an extraction position of the food 11 from the device 1, once the cooking liquid 7 has been drained by the dripping of the food 11 inside such a basket 9a.

The container 9b, that can have a bottom surface inclined downwards, can further be provided with at least one pipe possibly connected to the wastewater discharge network, for the disposal of the cooking liquid 7 drained from the food 11.

Note that the rest chamber 9 can be preferably at atmospheric pressure, or in general at a pressure lower than the pressure in the cooking chamber 3 in which the food 11 is placed, so that to allow normalizing the food 11 at ambient pressure and completing the cooking thereof.

According to another embodiment of the present invention the cooking device 101, schematically illustrated in figures 2 to 6, is very similar to the device 1 afore described and illustrated in figure 1, except for the different shape of the shut-off valves 4a, 4b and some further constructive details.

In particular, as regard to the shut-off valves 4a, 4b, each of them comprises a preferably cylindrical seat 6 in which a piston 105 sealingly slides and is also preferably activated by the liquid 7 pressurized by the preferably positive displacement pump 8 (note that the details relating to the presence of electrovalves for the inflow of liquid into the shut-off valves have been illustrated in figures 2-6 only referring to the upper shut-off valve 4a, in order to not burden the description, but it is understood that such electrovalves can be present as well in the lower shut-off valve 4b). ,

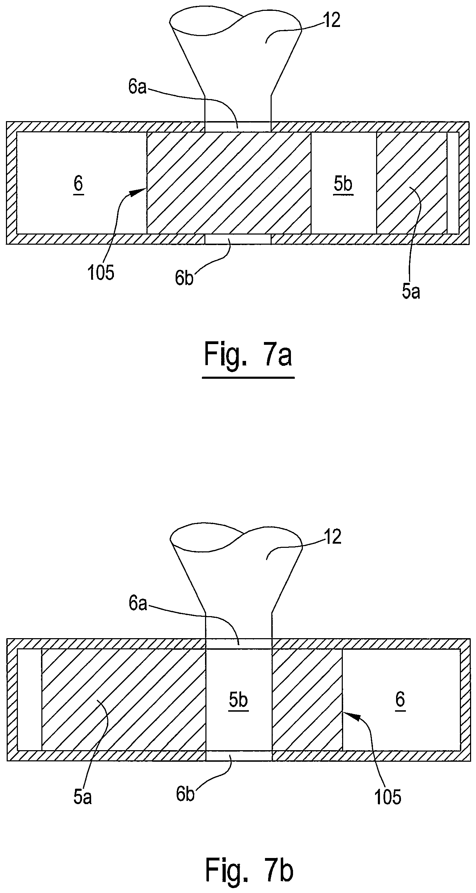

As also shown in figures 7a and 7b, that illustrate a particular of the upper shut-off valve 4a connected to the funnel 12 of the dispenser, such a shut-off valve 4a comprises a cylinder 6 provided with two diametrically opposed openings 6a, 6b obtained on the side surface thereof, and a preferably fluid-tight piston 105 sliding inside the cylinder 6 and provided with a cylinder body 5a inside which a transversal through-hole 5b is obtained and has an axis substantially parallel to the axis of the openings of the cylinder 6.

Note that the passage section of the transversal hole 5b of the upper shut-off valve 4a, as it will be evident for a person skilled in the art, is preferably substantially equal to the passage section of the opening 6a and to the passage section of the inlet 3a of the cooking chamber 3. Similarly, such a transversal hole 5b of the lower shut-off valve 4b has a section preferably equal to the one of the passage opening 6b and of the outlet 3b of the cooking chamber 3.

Note also that the inner walls of the transversal hole 5b, as it will be evident to the reader, also act as a guide for the food 11 by ensuring the fluidic tight between such a hole 5b and the inlet 3a or the outlet 3b of the cooking chamber 3, also thanks to the sealed sliding constraint of the piston 105, or better of the respective body 5a, with the cylindrical seat 6.

Also the piston 105 is therefore movable between two positions.

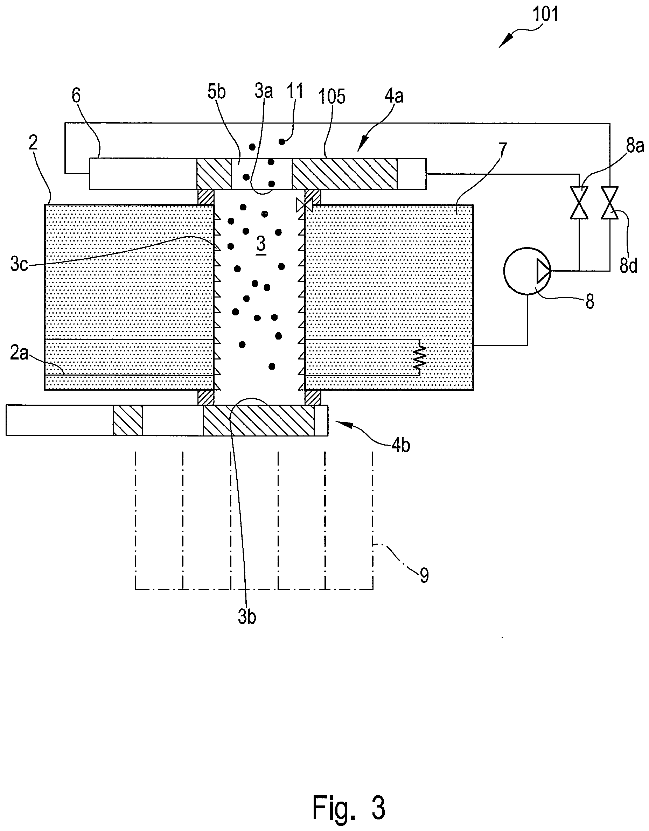

In a first position shown in figure 3 and figure 7a, the transversal hole 5b is not placed at the output opening of the cylinder 6, and therefore of the inlet 3a of the cooking chamber 3, and consequently the body 5a of the piston 105 obstructs directly or indirectly the inlet 3a and prevents the food 11 from passing in the cooking chamber 3.

In a second position shown in figure 2 and in figure 7b, the transversal hole 5b of the piston 105 is aligned with the output opening of the cylinder 6 and thus with the inlet 3a, so that to be substantially coaxial with the cooking chamber 3 itself. In this second position a food 11 can pass through the valve 4a and the inlet 3a, so that the food 11 can reach the cooking chamber 3 from the respective dispenser.

The device 101 herein described, according to another aspect of the present invention, also provides that the inner walls of the cooking chamber 3, i.e. the walls facing the food 11, have jutting elements 3c adapted to aid the detachment of the food 11 from the inner walls of the cooking chamber 3 at the end of the cooking of the food 11 itself.

Such jutting elements 3c are shown only schematically in figure 2 and substantially cover the entire extent of the walls of the cooking chamber 3. It is clear that the surface occupied by such jutting elements 3c can be different, for example smaller, on the inner walls of the cooking chamber 3 with respect to what herein schematically shown.

It should be remembered that, as already mentioned, such jutting elements can be made by means of a mesh coated on the inner parts of the cooking chamber 3, although however alternative embodiments of the jutting elements 3c are not excluded, for example composed of bosses spread along the inner side walls of the cooking chamber 3.

The person skilled in the art will understand that such a solution, consisting in the presence of jutting elements on the inner surface of the cooking chamber, is itself innovative and allows reducing the device maintenance and cleaning activities and avoiding possible food waste as well, independently from the other features of the fast cooking device herein described.

Coming back to the cooking device 101 depicted in the figures 2 to 6, differently from the device 1 shown in figure 1, it further comprises an assembling flange 10 interposed between the upper shut-off valve 4a and the inlet 3a of the cooking chamber 3, and/or interposed between the lower shut-off valve 4b and the outlet 3b of the same cooking chamber 3a.

In order to reduce the overall bulk, inside such an assembling flange 10 part of the channel can be obtained and connects the boiler 2 to the cooking chamber 3 and the aforementioned electrovalve 10a can be constrained to such a flange 10, being typically a solenoid electrovalve responsible for controlling the flow of liquid 7 running between the boiler 2 and the cooking chamber 3.

In a further alternative embodiment of the present invention shown in figure 8, the device 201 is provided with a boiler 2 with respective heating means 2a made similarly to the above described embodiment. Omitted parts have to be considered identical to the preceding described embodiment.

With respect to the embodiment of the figures 2 to 6, the embodiment of figure 8 is different for the presence of two cooking chambers 3 and 203.

In particular, the cooking chamber 3 is identical to the cooking chamber of the preceding embodiments, and is therefore denoted by the same numeral reference. On the contrary, the cooking chamber 203 is preferably provided with means for cooking a typology of food different from the food 11 cooked in the cooking chamber 3.

Preferably, the cooking chamber 203 is a cooking chamber for infusion beverages. Therefore, the cooking chamber 203 can be typically provided with at least one infusion filter, not shown in the figures, in a single piece or by means of the insertion of an outer element. Suitable means, for example a piston, may press the ingredients for the beverage before introducing water in the cooking chamber 203.

In this respect, it is not excluded that, through the use of outer elements that can be inserted in the cooking chamber 3, also the device 1 or the device 101 of figures 1 to 6 can be used for preparing infusion beverages.

In a variation of the device 201, the latter can be provided with two identical cooking chambers, in order to allow the simultaneous parallel cooking of two servings of at least one food 11.

The cooking chambers 3 and 203 can share a single shut-off valve 204b, or be provided with independent shut-off valves 4a similar to the already described valves. In figure 8, by way of example, the inlets of the chambers 3 and 203 have shut-off valves 4a independent one from another, whereas the outlets have a shared shut-off valve 204b.

However, it is evident that other combinations of single and/or shared valves can be selected for the device 201, for example the use of only independent valves 4a or the reversed configuration of inlets and outlets with respect to what shown, etc.

In general, in case of shut-off valves 4a independent one from another and, in particular, in case of independent valves with piston shutter 5, as the shut-off valves 4a of figure 8, it is evident that the arrangement of the chambers 3 and 203 and/or of the valves 4a is such to allow an effective travel of the respective piston 5 for both the shut-off valves 4a.

Referring to figure 8, for example the two chambers 3 and 203 could be arranged as staggered one from another. Alternatively, the piston shutters 205 of the shut-off valves 205a could have directions distinct and parallel one to another, or at least not incident as far as the respective maximum travel.

On the contrary, in case of single shut-off valve 204b, this can be provided with a number of openings 205b equal to the number of cooking chambers 3, 203.

In particular in the embodiment schematized in figure 8, the valve 204b has a movable piston 205 having a main body 5a provided with two transversal holes 5b. The two transversal holes can be spaced apart from one another so that to be able to synchronize the opening and closing of the cooking chambers 3 and 203, in such a way that they are simultaneously open or simultaneously closed, as in figure. However, it is not excluded that the transversal holes 5b are spaced apart from one another so that to be able to open only one cooking chamber 3, 203 at a time.

In this respect, in a variation of the present embodiment of the invention, a single valve can have a single transversal hole in order to be able to open only one cooking chamber at a time, or else to keep all the cooking chambers closed.

It is further not excluded the possibility of providing a larger number of transversal holes, in order to exert a higher control on the opening/closing of the various chambers.

It is further evident eventually that, although only two cooking chambers have been shown, in alternative embodiments of the present invention the fast cooking device can be provided with a larger number of cooking chambers.

Referring now to the figures 3 to 6, a process for using the fast cooking device 101 of the present invention is described in the following. Such a process also applies to the other embodiments shown, as evident for a person skilled in the art.

In a preliminary step, not shown, the boiler 2 is filled with water 7 drawn for example from the water system thanks to the afore mentioned pressurizing means, which possibly comprise a positive displacement pump 8, then it is led to a given pressure and at last heated, thanks to the afore said heating means 2a, inside the same boiler 2. The water 7 can reach, as mentioned, a temperature of about 160°C and a pressure comprised between 9 and 10 atmospheres, thus being in the overheated liquid state.

Once the boiler 2 has been filled with water 7 and once the latter has been led to the target thermodynamic conditions, a first use step of the cooking device 101, as visible in figure 3, provides the upper shut-off valve 4a arranged in an open position, i.e. with the hole 5b of the piston 105 aligned with the inlet 3a of the cooking chamber 3, so that to allow inserting the conveniently measured food 11 from the funnel 12 of the dispenser into the cooking chamber 3, the latter being at that time free from any liquid.

Note that such an operation of inserting the food 11 can occur, as mentioned, by means of an automatic dispenser, or else by means of manual insertion by a user.

In this operation step, the lower shut-off valve 4b is closed, i.e. with the body 5a of the respective piston 5 arranged so that to obstruct the outlet 3b of the cooking chamber 3, in order to retain the food 11 in the same cooking chamber 3.

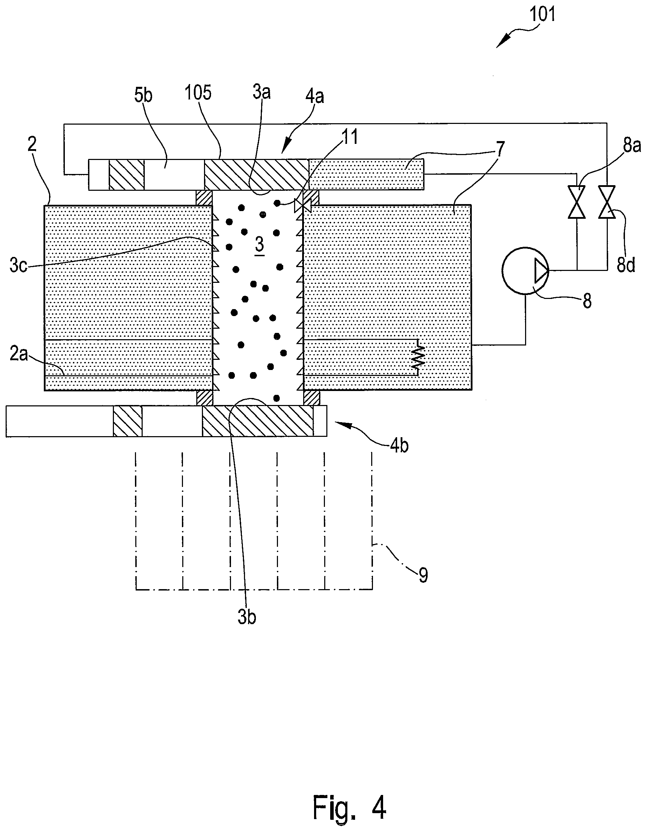

Then, referring to figure 4, the next step of activation of the device 101 provides that a certain amount of water 7 is directed, preferably by means of the opening of an electrovalve 8a and thanks to a positive displacement pump 8, to the shut-off valve 4a in order to close the same.

In the embodiment herein shown, the water thrust by the pump 8 and caused to travel towards the shut-off valve 4a thanks to the opening of the electrovalve 8a, reaches the piston 5 inside the cylindrical seat 6 and thus thrusts such a piston 5 to a closed position of the valve 4b, with the respective shuttering of the opening 3a of the cooking chamber 3.

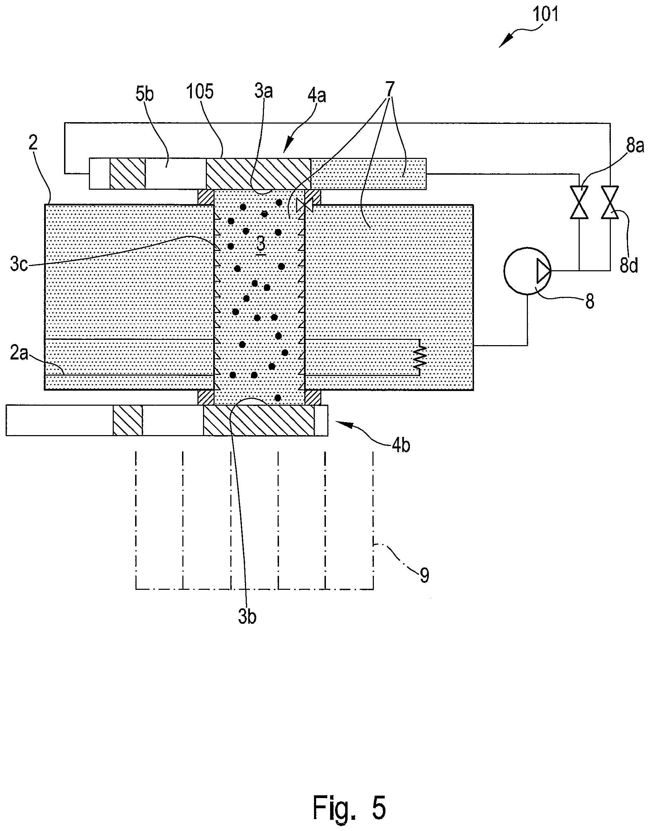

Then, in the next operation step referring to figure 5, a portion of the pressurized liquid 7 contained and heated in the boiler 2 is fed to the cooking chamber 3 by the opening of the electrovalve 10a.

In this step the fast cooking of the food 11 occurs, by the action of the liquid 7. As known, since the liquid 7 is pressurized, it can reach high temperatures without reaching the boiling point. Such a condition allows reducing the cooking times of the food 11.

Once the cooking step in the cooking chamber 3 has been completed, the next step of the operation of the cooking device 101 provides that the lower shut-off valve 4b is opened in order to clear the outlet 3b. Such an opening of the valve 4b is preferably preceded by a step of opening a suitable valve, for example an electrovalve, functionally connected to the cooking chamber 3, so that the liquid pressure is reduced inside the cooking chamber 3 itself.

Preferably, also the lower shut-off valve 4b is opened by means of the inflow of a certain amount of liquid 7 in the cylinder 6 thanks to the pump 8, in order to thrust the piston 5 in the opening direction of the same shut-off valve 4b.

Although not explicitly shown and optionally, thanks to such a solution also the upper shut-off valve 4a can be opened simultaneously, if required, or better subsequently.

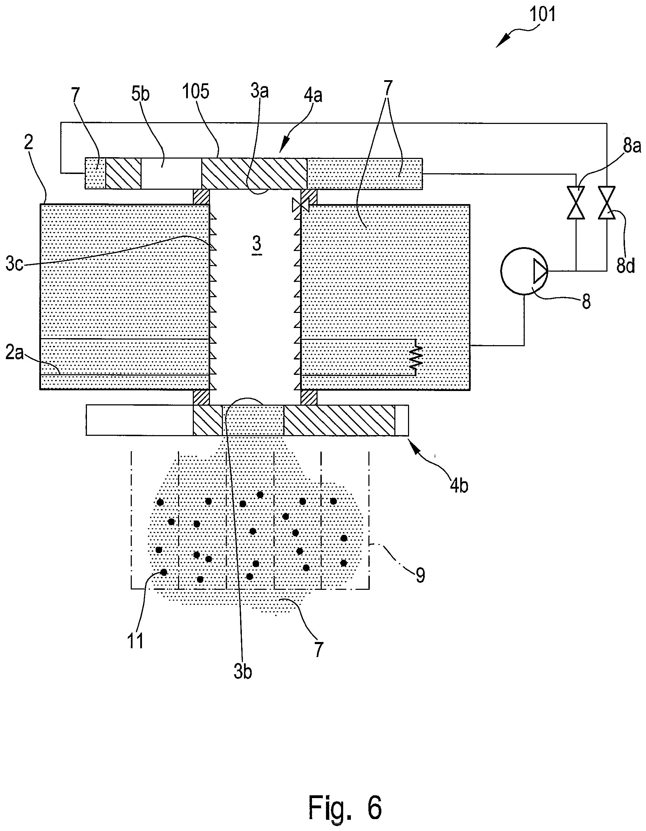

In this step, the liquid 7 contained in the cooking chamber 3 and the food 11 cooked by now are then discharged, typically by gravity, in the rest and draining chamber 9 (figure 6).

As mentioned, the rest and draining chamber 9, comprising as mentioned a pierced basket 9a, is shaped to retain the food 11 and to allow the draining of the liquid 7, the latter being collected and disposed under the pierced basket 9a.

Preferably, the liquid 7 contained in the cooking chamber 3 and separated from the cooked food 11 is collected and fed to a discharge duct, not shown in the figures.

Note that, in this step, the food 11 is exposed to the ambient pressure and finishes its cooking cycle. Therefore, the food 11 can be taken by a user, directly or indirectly, from the rest and draining chamber 9 in case the chamber 9 comprises a pierced basket 9a that can be displaced between a collecting position for the cooked food 11 and an extraction position for the same food 11.

In case the cooking device, as the one denoted by numeral 201, is provided with two or more cooking chambers 3, 203, two cooking cycles can occur in parallel or start in a shifted way, for example by filling a second cooking chamber 203 when a first cooking chamber 3 has just ejected the food 11 towards the rest and draining chamber 9.

As mentioned, in the second cooking chamber 203 an infusion beverage can be prepared, simultaneously or after the preparation of the food 11.

Briefly, referring to the device illustrated in figure 8, analogously to the cooking of the food 11, at the beginning ingredients, typically liquid or powdered, are inserted into the cooking chamber 203, when the latter is still free from water. The cooking chamber 203 is then sealed by the valves 4a and 204b and hot and pressurized liquid 7 is fed to the boiler 2 inside the chamber 203, in order to carry out the beverage infusion.

Note that, in a particular using form of the device 1 according to the present invention, the possible second cooking chamber 203 can be always kept full of water or cooking liquid 7, in order to make a source of pressurized hot water (or cooking liquid 7) continuously available to the user, that can be exploited both for possible food preparations and for cleaning the device 1 itself.

Following a given infusion period, the delivery of the beverage from the cooking chamber 203 occurs thanks to the opening of the valve 204b and the infused beverage is therefore dispensed to a suitable container, not shown in the figures.

## Claims

1. Device (1; 101; 201) for fast cooking at least one food (11), comprising a boiler (2) for heating a liquid (7), pressurizing means (8) to pressurize said liquid (7), at least one cooking chamber (3) fluidically connected to said boiler (2), said at least one cooking chamber (3) being provided with at least one inlet (3a) and at least one outlet (3b) for said food (11), at least one of said at least one inlet (3a) and at least one outlet (3b) of said at least one cooking chamber (3) being provided with one shut-off valve (4a; 4b; 204b) to selectively open and sealingly close said inlet and/or outlet (3a, 3b) of said at least one cooking chamber (4), **characterized in that** said one shut-off valve (4a; 4b; 204b) is driven for opening and/or closing by the action of said liquid (7) pressurized by said pressurizing means (8).

2. Device according to claim 1, wherein said one shut-off valve (4a; 4b; 204b) has at least one piston (5) translatable between a first position and a second position, wherein said piston (5), in said first position, obstructs said inlet (3a) or said outlet (3b), directly or indirectly, of said at least one cooking chamber (3), and in said second position said piston (5) opens, directly or indirectly, said inlet (3a) or outlet (3b) of said at least one cooking chamber (3) to allow said at least one food (11) passing through said inlet (3a) or outlet (3b).

3. Device according to claim 2, **characterized in that** said shut-off valve (4a; 4b; 204a) comprises at least one cylinder (6) inside which said at least one piston (5) slides, said cylinder (6) comprising at least one first passage opening (6a; 6b) for the passage of said food (11) to/from the outside of said at least one cooking chamber (3) and at least one second passage opening (6b; 6c) for the passage of said food (11) to/from said at least one cooking chamber (3), said at least one second passage opening (6b; 6c) being obtained on part of the side surface of said at least one cylinder (6) and coinciding, or being connected to, said inlet (3a) or said outlet (3b) of said at least one cooking chamber (3).

4. Device according to claim 3, **characterized in that** said at least one first opening (6a; 6d) and said at least one second opening (6b; 6c) are substantially diametrically opposed with respect to the axis of said cylinder (6) and/or form a single opening that is substantially diametric.

5. Device according to any one of claims 3 or 4, **characterized in that** said at least one piston (5) slides sealingly in said at least one cylinder (6).

6. Device according to any one of claims 3 to 5, **characterized in that** said piston (5) comprises a through-hole (5b) that is shaped so as to interconnect said at least one first opening (6a; 6d) and said at least one second opening (6b; 6c) of said at least one cylinder (6).

7. Device according to any one of claims 2 to 6, **characterized in that** said at least one piston (5) is directly driven by said pressurized liquid (7).

8. Device according to any one of the preceding claims, wherein said at least one inlet (3a) and said at least one outlet (3b) for said food (11) of said at least one cooking chamber (3) comprise said shut-off valve (4a, 4b).

9. Device according to any one of the preceding claims, wherein said cooking chamber (3) is at least partially contained in said boiler (2).

10. Device according to any one of the preceding claims, wherein at least one portion of the inner surface of said cooking chamber (3) has one or more jutting-inwards elements (3c) in order to facilitate the detachment of said at least one food (11) from said portion of the inner surface of said cooking chamber (3), at least at the end of the cooking cycle of said food (11).

11. Device according to claim 10, **characterized in that** said one or more jutting-inwards elements comprise a mesh net that coats at least part of the inner surface of said at least one cooking chamber (3).

12. Device according to any one of the preceding claims, **characterized in that** said at least one cooking chamber (3) and/or said one or more jutting-inwards elements (3c) are made of stainless steel.

13. Device according to any one of the preceding claims, wherein at least one electrovalve (10a) adjusts the inflow of said liquid (7) from said boiler (2) into said at least one cooking chamber (3).

14. Device according to any one of the preceding claims, wherein said pressurizing means comprise at least one positive-displacement pump (8).

15. Device according to any one of the preceding claims, comprising a plurality of cooking chambers (3; 203) usable in parallel and independently one from another.

## Patentansprüche

1. Vorrichtung (1; 101; 201) zum Schnellkochen mindestens eines Nahrungsmittels (11), umfassend einen Kessel (2) zum Erhitzen einer Flüssigkeit (7), Druckbeaufschlagungsmittel (8) zum Druckbeaufschlagen der Flüssigkeit (7), mindestens eine fluidisch mit dem Kessel (2) verbundene Kochkammer (3), wobei die mindestens eine Kochkammer (3) mit mindestens einem Einlass (3a) und mindestens einem Auslass (3b) für das Nahrungsmittel (11) ausgebildet ist, wobei mindestens einer des mindestens einen Einlasses (3a) und des mindestens eines Auslasses (3b) der mindestens einen Kochkammer (3) mit einem Absperrventil (4a; 4b; 204b) ausgebildet ist, um den Einlass und/oder den Auslass (3a, 3b) der mindestens einen Kochkammer (4) selektiv zu öffnen und (8) abdichtend zu schließen, **dadurch gekennzeichnet, dass**
das eine Absperrventil (4a; 4b; 204b) zum Öffnen und/oder Schließen durch die Wirkung der mittels der Druckbeaufschlagungsmittel mit Druck beaufschlagten Flüssigkeit (7) angetrieben wird.

2. Vorrichtung gemäß Anspruch 1, wobei das eine Absperrventil (4a; 4b; 204b) mindestens einen zwischen einer ersten Position und einer zweiten Position verschiebbaren Kolben (5) aufweist, wobei der Kolben (5) in der ersten Position den Einlass (3a) oder den Auslass (3b) der mindestens einen Kochkammer (3) direkt oder indirekt versperrt, und wobei der Kolben (5) in der zweiten Position den Einlass (3a) oder den Auslass (3b) der mindestens einen Kochkammer (3) direkt oder indirekt öffnet, um den Durchtritt des mindestens einen Nahrungsmittels (11) durch den Einlass (3a) oder den Auslass (3b) zu erlauben.

3. Vorrichtung gemäß Anspruch 2, **dadurch gekennzeichnet, dass** das Absperrventil (4a; 4b; 204a) mindestens einen Zylinder (6) umfasst, in welchem der mindestens eine Kolben (5) gleitet, wobei der Zylinder (6) mindestens eine erste Durchtrittsöffnung (6a; 6b) für den Durchtritt des Nahrungsmittels (11) zur/von der Außenseite der mindestens einen Kochkammer (3) und mindestens eine zweite Durchtrittsöffnung (6b; 6c) für den Durchtritt des Nahrungsmittels (11) zur/von der mindestens einen Kochkammer (3) umfasst, wobei die mindestens eine zweite Durchtrittsöffnung auf (6b; 6c) auf einem Teil der Seitenfläche des mindestens einen Zylinders (6) erhalten wird und mit dem Einlass (3a) oder dem Auslass (3b) der mindestens einen Kochkammer (3) übereinstimmt oder verbunden ist.

4. Vorrichtung gemäß Anspruch 3, **dadurch gekennzeichnet, dass** sich die mindestens eine erste Öffnung (6a; 6d) und die mindestens eine zweite Öffnung (6b; 6c) bezüglich der Achse des Zylinders (6) im Wesentlichen diametral gegenüberliegen und/oder eine einzige, im Wesentlichen diametrale Öffnung ausbilden.

5. Vorrichtung gemäß einem der Ansprüche 3 oder 4, **dadurch gekennzeichnet, dass** der mindestens eine Kolben (5) in dem mindestens einen Zylinder (6) abdichtend gleitet.

6. Vorrichtung gemäß einem der Ansprüche 3 bis 5, **dadurch gekennzeichnet, dass** der Kolben (5) ein Durchgangsloch (5b) aufweist, welches so ausgestaltet ist, dass es die mindestens eine erste Öffnung (6a; 6d) und die mindestens eine zweite Öffnung (6b; 6c) des mindestens einen Zylinders (6) miteinander verbindet.

7. Vorrichtung gemäß einem der Ansprüche 2 bis 6, **dadurch gekennzeichnet, dass** der mindestens eine Kolben (5) direkt von der druckbeaufschlagten Flüssigkeit (7) angetrieben wird.

8. Vorrichtung gemäß einem der vorhergehenden Ansprüche, wobei der mindestens eine Einlass (3a) und der mindestens eine Auslass (3b) für das Nahrungsmittel (11) der mindestens einen Kochkammer (3) das Absperrventil (4a, 4b) umfassen.

9. Vorrichtung gemäß einem der vorhergehenden Ansprüche, wobei die Kochkammer (3) zumindest teilweise im Kessel (2) enthalten ist.

10. Vorrichtung gemäß einem der vorhergehenden Ansprüche, wobei mindestens ein Teil der Innenfläche der Kochkammer (3) ein oder mehrere, nach Innen vorspringende Elemente (3c) aufweist, um das Ablösen des mindestens einen Nahrungsmittels (11) von dem Teil der Innenfläche der Kochkammer (3) zu erleichtern, zumindest am Ende des Kochzyklus für das Nahrungsmittel (11).

11. Vorrichtung gemäß Anspruch 10, **dadurch gekennzeichnet, dass** das eine oder die mehreren, nach Innen vorspringenden Elemente ein Maschennetz umfassen, welches mindestens einen Teil der Innenfläche der mindestens einen Kochkammer (3) überzieht.

12. Vorrichtung gemäß einem der vorhergehenden Ansprüche, **dadurch gekennzeichnet, dass** die mindestens eine Kochkammer (3) und/oder das eine oder die mehreren, nach Innen vorspringenden Elemente (3c) aus rostfreiem Stahl hergestellt sind.

13. Vorrichtung gemäß einem der vorhergehenden Ansprüche, wobei mindestens ein Elektroventil (10a) das Einströmen der Flüssigkeit (7) aus dem Kessel (2) in die mindestens eine Kochkammer (3) einstellt.

14. Vorrichtung gemäß einem der vorhergehenden Ansprüche, wobei die Druckbeaufschlagungsmittel mindestens eine Verdrängerpumpe (8) umfassen.

15. Vorrichtung gemäß einem der vorhergehenden Ansprüche, umfassend eine Vielzahl von Kochkammern (3; 203), welche parallel und unabhängig voneinander verwendbar sind.

## Revendications

1. Dispositif (1 ; 101 ; 201) pour la cuisson rapide d'au moins un aliment (11), comprenant une bouilloire (2) pour chauffer un liquide (7), des moyens de mise sous pression (8) pour mettre sous pression ledit liquide (7), au moins une chambre de cuisson (3) en communication fluidique avec ladite bouilloire (2), ladite au moins une chambre de cuisson (3) étant pourvue d'au moins une entrée (3a) et d'au moins une sortie (3b) pour ledit aliment (11), au moins l'une de ladite au moins une entrée (3a) et de ladite au moins une sortie (3b) de ladite au moins une chambre de cuisson (3) étant pourvue d'une vanne de fermeture (4a ; 4b ; 204b) pour ouvrir et fermer de manière étanche sélectivement ladite entrée et/ou ladite sortie (3a, 3b) de ladite au moins une chambre de cuisson (4), **caractérisé en ce que** ladite une vanne de fermeture (4a ; 4b ; 204b) est entraînée pour l'ouverture et/ou la fermeture par l'action dudit liquide (7) placé sous pression par lesdits moyens de mises sous pression (8).

2. Dispositif selon la revendication 1, dans lequel ladite une vanne de fermeture (4a ; 4b ; 204b) a au moins un piston (5) qui peut effecteur une translation entre une première position et une seconde position, dans lequel ledit piston (5), dans ladite première position, obstrue directement ou indirectement ladite entrée (3a) ou ladite sortie (3b) de ladite au moins une chambre de cuisson (3) et, dans ladite seconde position, ledit piston (5) ouvre directement ou indirectement ladite entrée (3a) ou ladite sortie (3b) de ladite au moins une chambre de cuisson (3) pour permettre audit au moins un aliment (11) de passer à travers ladite entrée (3a) ou ladite sortie (3b).

3. Dispositif selon la revendication 2, **caractérisé en ce que** ladite vanne de fermeture (4a ; 4b ; 204a) comprend au moins un cylindre (6) à l'intérieur duquel ledit au moins un piston (5) coulisse, ledit cylindre (6) comprenant au moins une première ouverture de passage (6a ; 6b) pour le passage dudit aliment (11) vers/de l'extérieur de ladite au moins une chambre de cuisson (3) ou depuis celui-ci et au moins une seconde ouverture de passage (6b ; 6c) pour le passage dudit aliment (11) vers ladite au moins une chambre de cuisson (3) ou depuis celle-ci, ladite au moins une seconde ouverture de passage (6b ; 6c) étant obtenue sur une partie de la surface latérale dudit au moins un cylindre (6) et coïncidant, ou étant connectée, avec ladite entrée (3a) ou ladite sortie (3b) de ladite au moins une chambre de cuisson (3).

4. Dispositif selon la revendication 3, **caractérisé en ce que** ladite au moins une première ouverture (6a ; 6d) et ladite au moins une seconde ouverture (6b ; 6c) sont sensiblement diamétralement opposées par rapport à l'axe dudit cylindre (6) et/ou forment une seule ouverture qui est sensiblement diamétrale.

5. Dispositif selon l'une quelconque des revendications 3 ou 4, **caractérisé en ce que** ledit au moins un piston (5) coulisse de manière étanche dans ledit au moins un cylindre (6).

6. Dispositif selon l'une quelconque des revendications 3 à 5, **caractérisé en ce que** ledit piston (5) comprend un trou traversant (5b) qui est formé de manière à interconnecter ladite au moins une première ouverture (6a ; 6d) et ladite au moins une seconde ouverture (6b ; 6c) dudit au moins un cylindre (6).

7. Dispositif selon l'une quelconque des revendications 2 à 6, **caractérisé en ce que** ledit au moins un piston (5) est entraîné directement par ledit liquide placé sous pression (7).

8. Dispositif selon l'une quelconque des revendications précédentes, dans lequel ladite au moins une entrée (3a) et ladite au moins une sortie (3b) pour ledit aliment (11) de ladite au moins une chambre de cuisson (3) comprennent ladite vanne de fermeture (4a, 4b).

9. Dispositif selon l'une quelconque des revendications précédentes, dans lequel ladite chambre de cuisson (3) est au moins en partie contenue dans ladite bouilloire (2).

10. Dispositif selon l'une quelconque des revendications précédentes, dans lequel au moins une partie de la surface interne de ladite chambre de cuisson (3) a un ou plusieurs éléments (3c) saillant vers l'intérieur afin de faciliter le détachement dudit au moins un aliment (11) de ladite partie de la surface interne de ladite chambre de cuisson (3) au moins à la fin du cycle de cuisson dudit aliment (11).

11. Dispositif selon la revendication 10, **caractérisé en ce que** lesdits un ou plusieurs éléments saillant vers l'intérieur comprennent un filet qui revêt au moins une partie de la surface interne de ladite au moins une chambre de cuisson (3).

12. Dispositif selon l'une quelconque des revendications précédentes, **caractérisé en ce que** ladite au moins une chambre de cuisson (3) et/ou lesdits un ou plusieurs éléments (3c) saillant vers l'intérieur sont constitués d'acier inoxydable.

13. Dispositif selon l'une quelconque des revendications précédentes, dans lequel au moins une électrovanne (10a) règle l'entrée dudit liquide (7) de ladite bouilloire (2) dans ladite au moins une chambre de cuisson (3).

14. Dispositif selon l'une quelconque des revendications précédentes, dans lequel lesdits moyens de mise sous pression comprennent au moins une pompe à déplacement positif (8).

15. Dispositif selon l'une quelconque des revendications précédentes, comprenant une pluralité de chambres de cuisson (3 ; 203) utilisables en parallèle et indépendamment l'une de l'autre.
